# EUROPEAN PATENT APPLICATION

(11) **EP 0 978 920 A1**
(43) Date of publication of application: **09.02.2000**
(21) Application number: 98306192.0
(22) Date of filing: 04.08.1998
(51) Int. Cl.: H02J 1/14

(54) **Power supply system**

(71) Applicant: Lucent Technologies Inc., Murray Hill, New Jersey 07974-0636 (US)
(72) Inventor: Loesel, Walter, 90768 Fuerth (DE); Wolf, Edmund, 91058 Erlangen (DE)
(74) Representative: Funnell, Samantha Jane

(57) **Abstract**

The present invention relates generally to the field of power supply systems and particularly to an electrical power supply system that flexibly reacts on voltage variations of the power supply system.

Electrical power supply systems are widely used. The known systems suffer from many disadvantages, e.g. switches are necessary and due to the use of switches spikes and voltage transients are generated by switching loads coupled to the power supply system.

The present invention avoids the disadvantages by providing an electrical power supply system having means for supplying power (10,11), loads (L1-L22) coupled to the means for supplying power (10,11), and means for controlling the power supply system (C), whereat each individual load (L1-L22) has at least one load element (30) and means for controlling (31) respective individual load element, and whereat said means for controlling (31) respective individual load element (30) is coupled to the means for controlling the power supply system (C), which controls each individual load (L1-L22).

## Description

### TECHNICAL FIELD

The present invention relates generally to the field of power supply systems and particularly to an electrical power supply system that flexibly reacts on voltage variations of the power supply system.

### BACKGROUND OF THE INVENTION

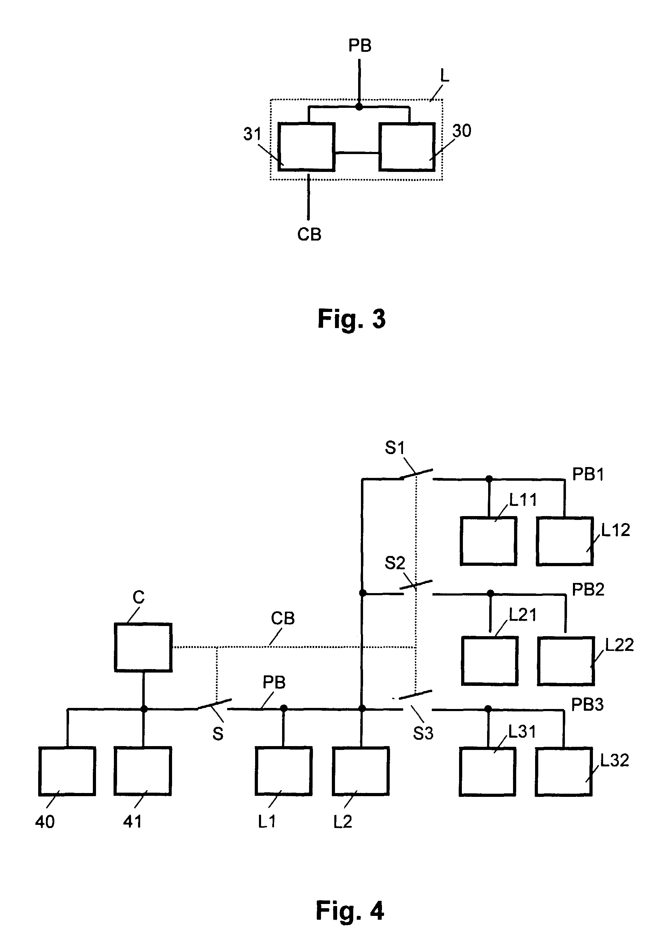

Electrical power supply systems are widely used. An example is shown in Fig. 4 which depicts a first power supply 40, a second power supply 41, power buses PB, PB1, PB2, PB3, means for controlling C, a control bus CB and switches S, S1, S2 and S3, being coupled into the power buses PB, PB1, PB2 and PB3 respectively. The switches S, S1, S2 and S3 can e. g. be relays or semiconductor switches. Loads L1, L2 are coupled to the power bus PB, loads L11, L12 are coupled to the power bus PB1, loads L21, L22 are coupled to the power bus PB2, loads L31, L32 are coupled to the power bus PB3. The first power supply 40, e. g. a net operated power supply, having a direct current of a nominal voltage, e. g. -48 V or -60 V as used for power supply in telecommunication networks. The second power supply 41 e. g. is a storage battery used as back-up for buffering failures of the first power supply 40. For reason of charging the storage battery 41 the voltage of the net operated power supply 40 can be higher than the nominal voltage. The means for controlling C monitors the present voltage. If there are variations in the voltage the means for controlling C can actuate switches S, S1, S2 and S3 via a control bus CB. If the voltage monitored by the means for controlling C is high enough, i. e. if a given first threshold is exceeded, e. g. -51.5 V for a nominal voltage of -48 V, all loads L1 to L32 are powered via the power buses PB, BP1, BP2 and BP3 by closing the switches S, S1, S2 and S3 under control of the means for controlling C. If the voltage monitored by the means for controlling C falls short of the first threshold a first group of loads, e. g. loads L11 and L12, is disconnected from the power supplies 40, 41 by the means for controlling by actuating switch S1 to open. Other thresholds may be given for the actuation of switches S2 and S3. The main switch S will be actuated by the means for controlling C if the monitored voltage falls short of a voltage critical for the storage battery 41, i. e. a voltage that indicates that further discharging of the storage battery 41 would cause damage to the storage battery 41.

The power supply system known has certain disadvantages. First of all, switches are necessary for the different power buses. A second disadvantage is that the power supply system is not very flexible, as the different loads have to be physically connected to one of the power buses. As a result all loads connected to one power bus are powered or not powered at the same time. An additional problem is caused by spikes and voltage transients generated by switching a power bus having a high load due to the sudden load change. Another problem is caused if loads have to be connected or disconnected from a power bus that is energised, as under these circumstances the contact elements may be damaged.

### SUMMARY OF THE INVENTION

Accordingly, it is an object of the present invention to provide a power supply system that flexibly reacts on voltage variations of the power supply system. It is the aim of the inventive power supply system under consideration to avoid the drawbacks known from the state of the art.

The object is achieved by providing an electrical power supply system having means for supplying power, loads coupled to the means for supplying power, and means for controlling the power supply system, whereat each individual load has at least one load element and means for controlling respective individual load element, and wherein said means for controlling respective individual load element is coupled to the means for controlling the power supply system, which controls each individual load.

An advantage of the present invention is that it allows a flexible power supply system to operate without the necessity of using switches to power on and off loads. It is another advantage of the present invention that spikes and voltage transients generated by switching the loads are avoided. A further advantage is that damaging contact elements of the loads are avoided when loads are coupled to or are uncoupled from the power supply system.

The present invention will become more fully understood from the detailed description given hereinafter and further scope of applicability of the present invention will become apparent. However, it should be understood that the detailed description is given by way of illustration only, since various changes and modifications within the spirit and scope of the invention will become apparent to those skilled in the art.

### BRIEF DESCRIPTION OF THE DRAWINGS

The following detailed description is accompanied by drawings of which
- Fig. 1: is a block diagram of an embodiment of a power supply system according to this invention,
- Fig. 2: is a block diagram of means for controlling a power supply system according to this invention as shown in Fig. 1,
- Fig. 3: is a block diagram of a load for a power supply system according to this invention as shown in Fig. 1, and
- Fig. 4: is a block diagram of a power supply system as previously known.

Identical denotations in different Figures represent identical elements. For sake of simplicity the buses shown in the figures are represented by one line only. However, it should be understood that the buses do provide more than one connection, e. g. two for the power buses shown.

### DETAILED DESCRIPTION

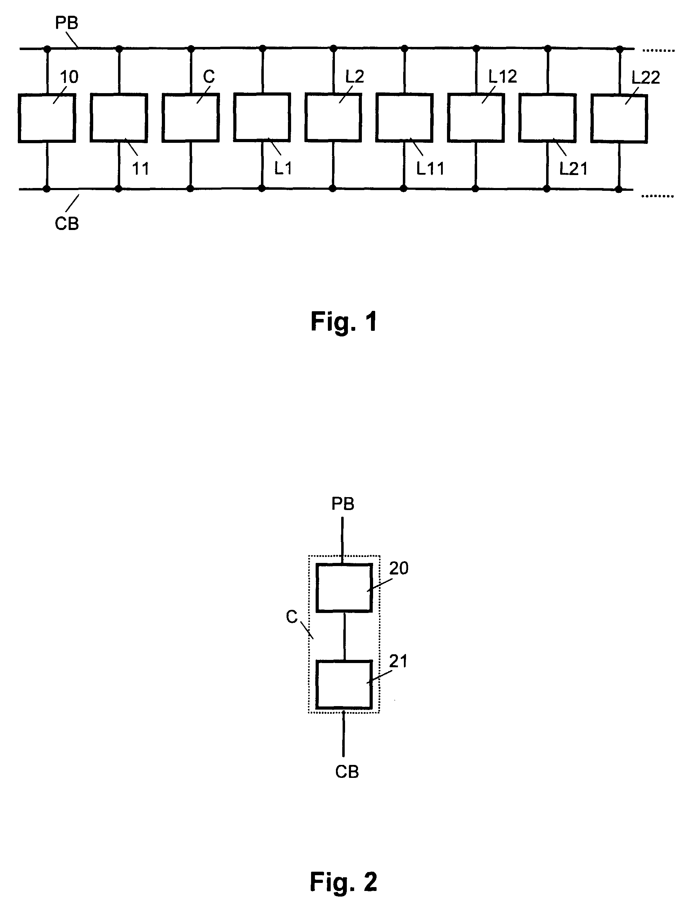

Depicted in Fig. 1 is a block diagram of an embodiment of a power supply system according to this invention. The power supply system comprises a power bus PB, a control bus CB, a first power supply 10, e. g. net operated power supply having a direct current with a nominal voltage, e. g. -48 V or -60 V as used for power supply in telecommunications networks, e. g. a rectifier or switched power supply, a second power supply, e. g. a storage battery used as back-up, means for controlling C and loads L1, L2, L11, L12, L21 and L22. All elements shown are coupled to the power bus PB as well as to the control bus CB. Additional loads may be coupled to the power bus PB and the control bus CB. In the given example as a power supply system in a telecommunications network, e. g. a wireless telephone network, the loads L1 to L22 can be parts of a base transceiver station (BTS). Loads L1 and L2 represent elements of the base control equipment (BCE), loads L11 and L12 represent important radio frequency elements, e. g. transceivers used for the management and control of mobile stations, loads L21 and L22 represent less important radio frequency elements, e. g. transceivers used for traffic.

The means for controlling C monitors the voltage of the power bus, i. e. the voltage of the power supplies 10 and 11. The means for controlling C can be formed e. g. by an analog-digital converter 20 and a microcomputer 21, as shown in Fig. 2. The analog-digital converter 20, which is coupled to the power bus PB, provides digital values representing the voltage of the power bus PB to the microcomputer 21. The microcomputer 21 compares the digital values of the analog-digital converter 20 to threshold values that are stored in a storage device of the microcomputer 21 not shown in Fig. 2. For a telecommunications network e. g. four thresholds are stored. A first threshold indicative for a voltage sufficient to power all loads L1 to L22 coupled to the power bus PB. The first threshold can be e. g. -51.5 V for a nominal voltage of 48 V. The first threshold indicates that the net operated power supply 10 is operative and therefore all loads can be powered. In case the net operated power supply 10 is not operative, the back-up battery 11 will be discharged and the voltage of the power bus PB will decrease. Additional thresholds are used to take account of the decreasing voltage. A second threshold indicative for a voltage sufficient only to power loads L1 to L12, which have been assigned as more important loads, i. e. loads L21 and L22 are no longer powered. The second threshold can be e. g. -46 V. A third threshold indicative for a voltage sufficient only to power loads L1 and L2 which have been assigned as most important loads, i. e. loads L11, L12, L21 and L22 are no longer powered. The third threshold can be e. g. -43 V. And a fourth threshold indicative for a voltage that can cause damage to the back-up battery 11, if the back-up battery 11 will be discharged further. In case the means for controlling C detects that the voltage of the power bus falls short of the fourth threshold loads L1 and L2 will not be powered any more, i. e. all loads L1 to L22 are no longer powered. The fourth threshold can be e. g. -39 V.

To power on or off the loads the means for controlling C, i. e. microcomputer 21, has stored the thresholds as explained above and in addition the loads corresponding to the individual thresholds in its storage element, i. e. a table of loads which are powered or not powered at a certain voltage of the power bus PB detected by the means for controlling C. If, e. g. the first threshold of -51.5 V is exceeded by the voltage detected by the means for controlling C, the means for controlling C, i. e. the microcomputer 21, addresses via the control bus CB all loads L1 to L22 to go in an energised mode. As the thresholds and the corresponding loads are stored in the storage element of the microcomputer 21 of the means for controlling C of the power supply system, the assignment of the loads to certain thresholds easily can be changed by reprogramming the assignment of a load to an other threshold. In this way it is no longer necessary to physically couple the load to another power bus as it was necessary for the power supply system already known.

Fig. 3 shown a block diagram of an embodiment of a load L as used according to this invention. Load L has means for controlling 31, e. g. a microcomputer, and a load device 30 which forms the actual load. The microcomputer 31 and the load device 30 are both coupled to the power bus PB. The microcomputer 31 in addition is coupled to the control bus CB. When the means for controlling C of the power supply system as shown in Fig. 1 addresses one of the loads L1 to L22 via the control bus CB the command to power on or off the load L is computed by microcomputer 31 which in turn powers on or off the load device 30 of the load L addressed. For complete understanding of the present invention it should be noted that powering on or off has the meaning of set the load device 30 in an operative or not operative mode, i. e. the voltage of the power supply system is not switched on or off but is always present at the load device 30. The microcomputer 31 of the addressed load L also can power on or off the load device 30, which itself may consist of several load elements, continuously or load element by load element to avoid sudden load variation in order to avoid disturbing variations of the voltage of the power bus PB. In order to further avoid disturbing variations of the voltage of the power bus PB the means for controlling C of the power supply system can address one load L1 to L22 after the other if a group of loads or all loads have to be powered on or off.

As the loads are only powered on, i.e. in an operative mode, under the control of the means for controlling the power supply system C and the means 31 for controlling the respective individual load, the loads easily can be coupled or uncoupled to or from the power bus, i. e. the power supplies, without causing the damage of contact elements of the loads.

To make the power supply system as explained above operative the means for controlling the power system C and the means for controlling the individual loads 21 have to be powered permanently. This can be achieved by directly coupling them to the power bus PB or to an additional power supply used only for the means for controlling C and 21.

Instead of using buses for coupling the loads to the power supplies and the means for controlling, all loads can be coupled directly to the power supplies and the means for controlling. Especially coupling the loads directly to the power supplies by using individual wiring for each load or for groups of loads avoids power buses having a copper wiring with big dimensioned cross-sections. Instead of using a separate control bus the control signals also can be sent via the power bus. It is another possibility to use optical signals and an optical fibre to form the control bus, in order to reduce disturbances of the transmission of the control signals.

## Claims

1. An electrical power supply system having means for supplying power (10,11), loads (L1 to L22) coupled to the means for supplying power (10,11), and means for controlling the power supply system (C),
**characterised in**, that
each individual load (L1 to L22) has at least one load element (30) and means for controlling (31) respective individual load element (30), and
said means for controlling (31) respective individual load element (30) is coupled to the means for controlling the power supply system (C), which controls each individual load (L1 to L22).

2. An electrical power supply system according to claim 1,
**characterised in**, that
the loads (L1 to L22) are directly coupled to the means for supplying power (10,11).

3. An electrical power supply system according to claim 1 or 2,
**characterised in**, that
said load element (30) of the loads (L1 to L22) is powered on or off under the control of said means for controlling (31) respective individual load, which itself is controlled by the means for controlling the power supply system (C).

4. An electrical power supply system according to one of the claims 1 to 3,
**characterised in,** that
the means for controlling the power supply system (C) monitors the voltage of the means for supplying power (10,11) and produces control signals based on a comparison of the monitored voltage to thresholds stored in the means for controlling the power supply system (C).

5. An electrical power supply system according to claim 4,
**characterised in**, that
individual loads (L1 to L22) are assigned to certain thresholds.

6. An electrical power supply system according to one of the claims 1 to 5,
**characterised in**, that
the means for controlling the power supply system (C) has a microcomputer (21) and an analog-digital converter (20).

7. An electrical power supply system according to one of the claims 1 to 6,
**characterised in,** that
said means for controlling (31) respective individual load element (30) is a microcomputer.

8. An electrical power supply system according to one of the claims 1 to 7,
**characterised in,** that
the means for supplying power (10,11) are formed by a net operated power supply (10) and a storage battery (11).
